# EUROPEAN PATENT APPLICATION

(11) **EP 2 455 661 A2**
(43) Date of publication of application: **23.05.2012**
(21) Application number: 11188194.2
(22) Date of filing: 08.11.2011
(51) Int. Cl.: F23N 5/12, F23N 5/24

(54) **Combustion dynamics monitoring ignition system for a gas turbine**

(30) Priority: 22.11.2010 US 951539
(71) Applicant: GE Aviation Systems LLC, Grand Rapids, MI 49512-1991 (US)
(72) Inventor: Steffler, Joseph Bernard, Grand Rapids, MI Michigan 49512 (US)
(74) Representative: Williams, Andrew Richard

(57) **Abstract**

A combustor (102) including a casing (104) surrounding a combustion zone (106), and an ignitor plug (108) including a tip (110), a base (112), and a body (114) extending therebetween, the body (114) extending through the combustor casing (104) such that the tip (110) is proximate the combustion zone (106), the ignitor plug (108) configured to receive ignition energy through the base (112) and generate an ignition source at the tip (110), the ignitor plug (108) further configured to sense combustion dynamics in the combustion zone (106) and generate a signal relative to the sensed combustion dynamics.

## Description

### BACKGROUND OF THE INVENTION

The field of the invention relates generally to gas turbine engine combustors, and more specifically, to a method and system for engine ignition and monitoring.

Combustion instability in an engine can be caused by many faults and operational issues with any given gas turbine engine or piston driven engine. For example, clogged or open fuel nozzles, blocked compressor nozzles, and incorrect inlet guide vane (IGV) schedules can lead to combustion instability. If not detected early, some of these faults can significantly reduce the expected life of the engine as a whole. Combustor rumble is also a condition that is difficult to detect and significantly shortens the life of the combustor components and turbine nozzle.

The combustion process of a gas turbine is monitored carefully to detect instability and incipient failures in the gas path up-stream of the combustor and its associated fuel systems. Ignitor plugs are used to introduce an ignition spark into the combustor of a gas turbine engine. The ignitor system is typically not used once the engine is started and running.

### BRIEF DESCRIPTION OF THE INVENTION

In one embodiment, a combustor includes a casing surrounding a combustion zone and an ignitor plug including a tip, a base, and a body extending therebetween. The body extends through the combustor casing such that the tip is proximate the combustion zone. The ignitor plug is configured to receive ignition energy through the base and generate an ignition source at the tip. The ignitor plug is further configured to sense combustion dynamics in the combustion zone and generate a signal relative to the sensed combustion dynamics.

In another embodiment, a method of engine ignition and monitoring includes generating a spark in a combustion zone of an engine using an ignitor plug and receiving combustion dynamics information from the combustion zone using the ignitor plug.

In yet another embodiment, an ignition system includes a combustor, a casing surrounding a combustion zone, and an ignitor plug including a tip, a base, and a body extending therebetween. The body extends through the combustor casing such that the tip is proximate a combustion zone at least partially surrounded by the casing. The ignitor plug is configured to receive ignition energy through the base and generate an ignition source at the tip. The ignitor plug is further configured to sense combustion dynamics in the combustion zone and generate a signal relative to the sensed combustion dynamics.

### BRIEF DESCRIPTION OF THE DRAWINGS

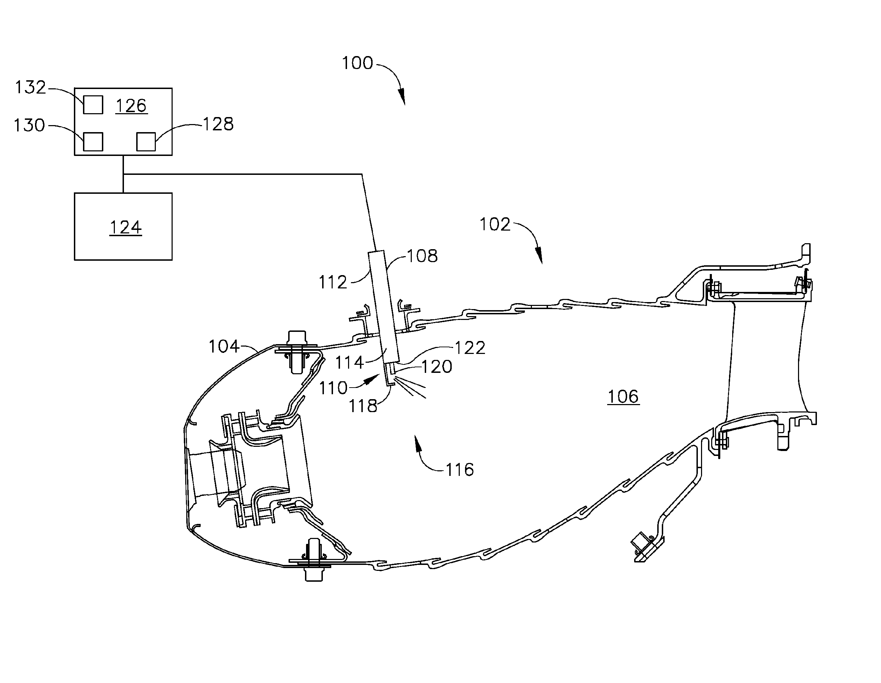

FIG. 1 shows exemplary embodiments of the method and system described herein.
FIG. 1 is a schematic block diagram of an ignition system in accordance with an exemplary embodiment of the present invention.

### DETAILED DESCRIPTION OF THE INVENTION

The following detailed description illustrates embodiments of the invention by way of example and not by way of limitation. It is contemplated that the invention has general application to analytical and methodical embodiments for engine ignition and monitoring in industrial, commercial, and residential applications.

As used herein, an element or step recited in the singular and proceeded with the word "a" or "an" should be understood as not excluding plural elements or steps, unless such exclusion is explicitly recited. Furthermore, references to "one embodiment" of the present invention are not intended to be interpreted as excluding the existence of additional embodiments that also incorporate the recited features.

When not used for ignition, a combustor ignitor plug can be used as a sensor probe inside the combustor to monitor the electro-static pyro characteristics of the combustion process. The ignitor plugs can be used as a sensor when not used for ignition purposes. The combustion process itself creates an electrical field signature that varies with the power level of the engine as well as with fault conditions within the combustor environment. The ignitor plug is therefore exposed to this electrical signature and acts as an electrical probe into the combustor gas path. Amplifiers and signal processing in a sensor circuit coupled to the ignitor plug is used to extract usage and health data and information from the data collected.

Currently, ignitor plugs are only used for ignition purposes. Embodiments of the present invention utilize the ignitor plugs as electrical probes in the combustion environment; therefore, bringing dual-use to devices that are only used a small percentage of the time during there typical use model.

FIG. 1 is a schematic block diagram of an ignition system 100 in accordance with an exemplary embodiment of the present invention. In the exemplary embodiment, ignition system 100 includes a combustor 102 that includes a casing 104 surrounding a combustion zone 106 and an ignitor plug 108. In one embodiment, combustor 102 comprises a gas turbine engine combustor. In various embodiments, combustor 102 comprises a piston cylinder of a piston driven internal combustion engine. Ignitor plug 108 includes a tip 110, a base 112, and a body 114 extending therebetween. Body 114 extends through combustor casing 104 such that tip 110 is proximate combustion zone 106 at least partially surrounded by casing 104. Ignitor plug 108 is configured to receive ignition energy through base 112 and generate an ignition source 116 at tip 110. In various embodiments, ignition source 116 comprises a spark. Ignitor plug 108 is further configured to sense combustion dynamics in combustion zone 106 and generate a signal relative to the sensed combustion dynamics.

Ignitor plug 108 includes a first electrode 118, a second electrode 120, and an electrical insulator 122 arranged such that first electrode 118 and second electrode 120 cooperate to carry an electrical charge and to produce an ignition spark for combustor 102 between a tip of first electrode 118 and a tip of second electrode 120. First electrode 118, second electrode 120, and electrical insulator 122 are also arranged such that first electrode 118 and second electrode 120 cooperate to carry an electrical current related to an electrostatic field proximate first electrode 118 and second electrode 120.

Ignition system 100 further includes an ignition circuit 124 communicatively coupled to ignitor plug 108. Ignition circuit 124 is configured to generate an amount of ignition energy that is transmitted to ignitor plug 108 where ignition source 116 is generated and introduced into combustion zone 106. Ignition system 100 also includes a sensor circuit 126 communicatively coupled to ignitor plug 108. Sensor circuit 126 is configured to receive combustion dynamics information from ignitor plug 108. Sensor circuit 126 is configured to block or clamp at least a portion of the ignition energy transmitted to ignitor plug 108 to generate ignition source 116. In one embodiment, sensor circuit 126 is AC coupled to ignitor plug 108 using for example, a capacitor 128. A processor 130 comprising a memory 132 that stores instructions and data to facilitate processing data and generating control and signal data for use by ignition system 100. Processor 130 may be part of ignition circuit 124, sensor circuit 126, or part of the overall ignition system 100.

The term processor, as used herein, refers to central processing units, microprocessors, microcontrollers, reduced instruction set circuits (RISC), application specific integrated circuits (ASIC), logic circuits, and any other circuit or processor capable of executing the functions described herein.

As used herein, the terms "software" and "firmware" are interchangeable, and include any computer program stored in memory for execution by processor 130, including RAM memory, ROM memory, EPROM memory, EEPROM memory, and nonvolatile RAM (NVRAM) memory. The above memory types are exemplary only, and are thus not limiting as to the types of memory usable for storage of a computer program.

As will be appreciated based on the foregoing specification, the above-described embodiments of the disclosure may be implemented using computer programming or engineering techniques including computer software, firmware, hardware or any combination or subset thereof, wherein the technical effect is utilizing the ignition system of an engine to monitor combustion conditions in the engine during periods when the ignition system is not being used for ignition purposes. Any such resulting program, having computer-readable code means, may be embodied or provided within one or more computer-readable media, thereby making a computer program product, i.e., an article of manufacture, according to the discussed embodiments of the disclosure. The computer-readable media may be, for example, but is not limited to, a fixed (hard) drive, diskette, optical disk, magnetic tape, semiconductor memory such as read-only memory (ROM), and/or any transmitting/receiving medium such as the Internet or other communication network or link. The article of manufacture containing the computer code may be made and/or used by executing the code directly from one medium, by copying the code from one medium to another medium, or by transmitting the code over a network.

The above-described embodiments of a method and system of engine ignition and combustion monitoring provides a cost-effective and reliable means for using the ignition system of the engine during periods other than during an ignition sequence to monitor a performance of the engine and the ignition system. As a result, the methods and systems described herein facilitate operating and monitoring a condition of a vehicle engine in a cost-effective and reliable manner.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the invention are indicated in the following clauses:
1. A combustor comprising:
   a casing surrounding a combustion zone; and
   an ignitor plug comprising a tip, a base, and a body extending therebetween; said body extending through the combustor casing such that said tip is proximate the combustion zone, said ignitor plug configured to receive ignition energy through the base and generate an ignition source at said tip, said ignitor plug further configured to sense combustion dynamics in the combustion zone and generate a signal relative to the sensed combustion dynamics.
2. A combustor in accordance with Clause 1, wherein said tip is configured to receive information relative to an electrostatic field within the combustion zone.
3. A combustor in accordance with Clause 2, wherein said ignitor plug is configured to generate an electrical signal relative to the received electrostatic field information.
4. A combustor in accordance with Clause 1, wherein said ignitor plug is configured to generate an electrical signal relative to a health of the ignitor plug based on at least one of the received ignition energy and the generated ignition source, and the sensed combustion dynamics and the generated electrostatic field information signal.
5. A method of engine ignition and monitoring, said method comprising:
   generating a spark in a combustion zone of an engine using an ignitor plug; and
   receiving combustion dynamics information from the combustion zone using the ignitor plug.
6. A method in accordance with Clause 5, further comprising;
   transmitting an electrical current to the ignitor plug during an ignition sequence;
   and
   discharging a source of ignition into the combustion zone using the ignitor plug.
7. A method in accordance with either of Clause 5 or 6, further comprising:
   receiving a charge on a tip of the ignitor plug from combustion dynamics in the combustion zone during a monitoring sequence;
   transforming the received charge to an electrical signal indicative of the combustion dynamics; and
   transmitting the electrical signal to a combustion dynamics monitoring system.
8. A method in accordance with any one of Clauses 5 to 7, further comprising:
   operating the ignitor plug as an ignition source during an ignition sequence of an engine; and
   operating the ignitor plug as a combustion dynamics sensor during a monitoring sequence of the engine.
9. A method in accordance with any one of Clauses 5 to 8, further comprising:
   electrically isolating the ignitor plug from a sensing circuit associated with the ignitor plug during a ignition sequence; and
   electrically isolating the ignitor plug from an ignitor circuit associated with the ignitor plug during a monitoring sequence.
10. A method in accordance with any one of Clauses 5 to 9, wherein the engine comprises a piston driven internal combustion engine, said method further comprising alternatingly operating the ignitor plug as an ignition source and a combustion dynamics sensor during operation of the engine.
11. A method in accordance with any one of Clauses 5 to 9, wherein the engine comprises an internal combustion engine, said method further comprising operating the ignitor plug as an ignition source during a startup of the engine and operating the ignitor plug as a combustion dynamics sensor during operation of the engine.
12. A method in accordance with any one of Clauses 5 to 11, further comprising generating an electrical signal relative to a health of the ignitor plug based on at least one of the generated spark and the received combustion dynamics information.
13. A method in accordance with any one of Clauses 5 to 12, wherein generating a spark comprises blocking at least a portion of an amount of energy transmitted to the ignitor plug to generate the spark from a circuit configured to receive combustion dynamics information from the ignitor plug.
14. A method in accordance with any one of Clauses 5 to 13, wherein receiving combustion dynamics information using the ignitor plug comprises alternating current (AC) coupling the ignitor plug to a sensor circuit.
15. An ignition system comprising:
   a combustor comprising:
      a casing surrounding a combustion zone; and
      an ignitor plug comprising a tip, a base, and a body extending therebetween; said body extending through a combustor casing such that said tip is proximate a combustion zone at least partially surrounded by the casing, said ignitor plug configured to receive ignition energy through the base and generate an ignition source at said tip, said ignitor plug further configured to sense combustion dynamics in the combustion zone and generate a signal relative to the sensed combustion dynamics.
16. A system in accordance with Clause 15, wherein said ignitor plug comprises a first electrode, a second electrode, and an electrical insulator arranged such that the first electrode and the second electrode cooperate to carry an electrical charge and to produce an ignition spark for the combustor between a tip of the first electrode and a tip of the second electrode.
17. A system in accordance with Clause 15, wherein said ignitor plug comprises a first electrode, a second electrode, and an electrical insulator arranged such that the first electrode and the second electrode cooperate to carry an electrical current related to an electrostatic field proximate the first electrode and the second electrode.
18. A system in accordance with any one of Clauses 15 to 17, further comprising a sensor circuit configured to receive combustion dynamics information from the ignitor plug, said sensor circuit configured to block at least a portion of an amount of energy transmitted to the ignitor plug to generate the spark.
19. A system in accordance with any one of Clauses 15 to 18, further comprising a sensor circuit AC coupled to the ignitor plug.

## Claims

1. A combustor (102) comprising:
a casing (104) at least partially surrounding a combustion zone (106); and
an ignitor plug (108) comprising a tip (110), a base (112), and a body (114) extending therebetween; said body extending through the combustor casing such that said tip is proximate the combustion zone, said ignitor plug configured to receive ignition energy through the base and generate an ignition source at said tip, said ignitor plug further configured to sense combustion dynamics in the combustion zone and generate a signal relative to the sensed combustion dynamics.

2. A combustor (102) in accordance with Claim 1, wherein said tip (110) is configured to receive information relative to an electrostatic field within the combustion zone (106).

3. A combustor (102) in accordance with Claim 2, wherein said ignitor plug (108) is configured to generate an electrical signal relative to the received electrostatic field information.

4. A combustor (102) in accordance with Claim 1, wherein said ignitor plug (108) is configured to generate an electrical signal relative to a health of the ignitor plug based on at least one of the received ignition energy and the generated ignition source, and the sensed combustion dynamics and the generated electrostatic field information signal.

5. A combustor (102) in accordance with any one of the preceding claims, wherein said ignitor plug (108) comprises a first electrode (118), a second electrode (120), and an electrical insulator (122) arranged such that the first electrode and the second electrode cooperate to carry an electrical charge and to produce an ignition spark for the combustor (102) between a tip of the first electrode and a tip of the second electrode.

6. A combustor (102) in accordance with any one of claims 1 to 4, wherein said ignitor plug (108) comprises a first electrode (118), a second electrode (120), and an electrical insulator (122) arranged such that the first electrode and the second electrode cooperate to carry an electrical current related to an electrostatic field proximate the first electrode and the second electrode.

7. A combustor (102) in accordance with any one of the preceding claims, further comprising a sensor circuit configured to receive combustion dynamics information from the ignitor plug, said sensor circuit configured to block at least a portion of an amount of energy transmitted to the ignitor plug to generate the spark.

8. A combustor (102) in accordance with any one of the preceding claims, further comprising a sensor circuit (126) AC coupled to the ignitor plug (108).

9. A method of engine ignition and monitoring, said method comprising:
generating a spark in a combustion zone (106) of an engine using an ignitor plug (108); and
receiving combustion dynamics information from the combustion zone using the ignitor plug.

10. A method in accordance with Claim 9, further comprising;
transmitting an electrical current to the ignitor plug (108) during an ignition sequence; and
discharging a source of ignition (116) into the combustion zone using the ignitor plug.

11. A method in accordance with either of Claim 9 or 10, further comprising:
receiving a charge on a tip of the ignitor plug (108) from combustion dynamics in the combustion zone (106) during a monitoring sequence;
transforming the received charge to an electrical signal indicative of the combustion dynamics; and
transmitting the electrical signal to a combustion dynamics monitoring system.

12. A method in accordance with any one of Claims 9 to 11, further comprising:
operating the ignitor plug as an ignition source during an ignition sequence of an engine; and
operating the ignitor plug as a combustion dynamics sensor during a monitoring sequence of the engine.

13. A method in accordance with any one of Claims 9 to 12, further comprising:
electrically isolating the ignitor plug (108) from a sensing circuit (126) associated with the ignitor plug during an ignition sequence; and
electrically isolating the ignitor plug (108) from an ignitor circuit (124) associated with the ignitor plug during a monitoring sequence.

14. A method in accordance with any one of Claims 9 to 13, further comprising generating an electrical signal relative to a health of the ignitor plug (108) based on at least one of the generated spark and the received combustion dynamics information.

15. A method in accordance with any one of Claims 9 to 14, wherein generating a spark comprises blocking at least a portion of an amount of energy transmitted to the ignitor plug (108) to generate the spark from a circuit configured to receive combustion dynamics information from the ignitor plug.
